# DEMANDE DE BREVET EUROPEEN

(11) **EP 0 721 072 A1**
(43) Date de publication de la demande: **10.07.1996**
(21) Numéro de dépôt: 95402893.2
(22) Date de dépôt: 21.12.1995
(51) Int. Cl.: F16H 3/091, F16D 23/06

(54) **Dispositif de commande et de synchronisation pour marche arrière de boîte de vitesses mécanique**

(30) Priorité: 06.01.1995 FR 9500089; 06.01.1995 FR 9500090
(71) Demandeur: REGIE NATIONALE DES USINES RENAULT, F-92109 Boulogne-Billancourt (FR)
(72) Inventeur: Prenel, Jean-Marc, F-78730 St-Arnoult-en-Yvelines (FR); Raoul, Michel, F-78990 Elancourt (FR)

(57) **Abrégé**

Dispositif de commande interne de marche arrière pour boîte de vitesses mécanique (1) à arbres parallèles (3,4), munie d'un axe de marche arrière (6) déplaçable entre une première position ou position de point mort et de marche avant dans laquelle le mouvement est transmis directement de l'arbre primaire (3) à l'arbre secondaire (4), et une seconde position ou position de marche arrière dans laquelle il assure l'inversion du mouvement entre l'arbre primaire (3) et l'arbre secondaire (4), caractérisé en ce que l'axe de marche arrière (6) porte deux pignons intermédiaires (7,17) liés en permanence avec l'arbre primaire (3) et avec l'arbre secondaire (4).

Dispositif de synchronisation des pignons (7,17) comporte un anneau de synchronisation (22) avec une surface conique de friction (24) rencontrant une surface conique de friction (26) de second pignon (17), le premier pignon (7) est lié à l'axe (6) de façon à se déplacer avec celui-ci axialement, alors que le second pignon est immobilisé axialement vis-à-vis du carter (2).

## Description

La présente invention se rapporte à la commande interne des boîtes de vitesses mécanique.

Elle concerne notamment un dispositif de synchronisation pour boîte de vitesses mécanique, destiné à égaliser les vitesses de rotation d'un premier et d'un second pignon tournant autour du même axe de rotation avant de rendre ces deux pignons solidaires en rotation par crabotage de leurs dentures, et son application à la commande interne de marche arrière d'une boîte de vitesses mécanique à arbres parallèles.

Dans les boîtes de vitesses mécaniques classiques, présentant un arbre d'entrée de mouvement, ou arbre primaire, et un arbre de sortie de mouvement, ou arbre secondaire, la marche arrière est obtenue en inversant le sens du mouvement entre les deux arbres par l'intermédiaire d'un pignon intermédiaire de marche arrière, monté sur un axe de marche arrière, et engagé avec chacun des arbres de la boîte.

De la façon la plus simple, la prise de mouvement nécessaire à l'engagement de la marche arrière peut être effectuée par l'entrée successive de la denture du pignon intermédiaire de marche arrière, dans celle d'un pignon primaire et d'un pignon secondaire de la boîte. Cependant, ces engrènements sont toujours désagréables pour le conducteur, car ils se traduisent par des craquements, et peuvent dans certains cas être pratiquement impossibles à obtenir.

Dans de nombreuses boîtes de vitesses, les problèmes de craquements liés à l'engagement du pignon intermédiaire avec les arbres de la boîte, sont partiellement supprimés en maintenant toujours en prise le pignon intermédiaire avec un pignon primaire. Cette disposition ne peut, bien entendu, être reproduite sur les deux arbres de la boîte, car la marche arrière serait alors engagée en permanence.

Pour éviter les problèmes de craquement liés à la prise de denture du pignon intermédiaire avec l'arbre secondaire de la boîte de vitesses, il a déjà été proposé de freiner le pignon intermédiaire. La publication FR 2 584 791, au nom de la demanderesse, propose à ce sujet un dispositif de commande de marche arrière utilisant la course d'approche du pignon intermédiaire pour freiner celui-ci avant sa rencontre avec un pignon primaire et avec un pignon secondaire. Cette disposition facilite la prise de mouvement du pignon intermédiaire, qui doit cependant engrener avec deux pignons pour assurer l'engagement de la marche arrière.

La présente invention vise, notamment, à supprimer tous les problèmes liés à la prise de mouvement du pignon intermédiaire de marche arrière avec les arbres d'une boîte de vitesses.

Elle propose à cet effet un dispositif de commande interne de marche arrière pour boîte de vitesses mécanique à arbres parallèles, munie d'un axe de marche arrière déplaçable entre une première position ou position de point mort et de marche avant dans laquelle le mouvement est transmis directement de l'arbre primaire à l'arbre secondaire, et une seconde position ou position de marche arrière dans laquelle il assure l'inversion du mouvement entre l'arbre primaire et l'arbre secondaire. Ce dispositif est caractérisé en ce que l'axe de marche arrière porte deux pignons intermédiaires liés en permanence avec l'arbre primaire et avec l'arbre secondaire.

Conformément à l'invention, l'engagement de la marche arrière est obtenu par immobilisation relative des deux pignons intermédiaires.

L'immobilisation des pignons intermédiaires étant limitée à l'engagement de la marche arrière, un tel dispositif doit assurer l'indépendance mutuelle desdits pignons intermédiaires dans toutes les autres situations.

A cet effet, il est prévu que les deux pignons intermédiaires tournent librement autour de l'axe de marche arrière et que le premier pignon intermédiaire soit immobilisé axialement sur l'axe de marche arrière, tandis que le second pignon intermédiaire est immobilisé axialement vis-à-vis du carter de la boîte.

Conformément à l'invention, la prise de mouvement nécessaire à l'engagement de la marche arrière s'effectue donc entre les deux pignons intermédiaires.

Dans ce but, les pignons intermédiaires possèdent des dentures intérieures engrenant lors de l'engagement de la marche arrière.

Selon une autre caractéristique de l'invention, le dispositif de commande interne de marche arrière en question comporte des moyens de synchronisation permettant d'égaliser la vitesse de rotation des pignons intermédiaires avant leur engrènement.

La présente invention vise également à réduire l'encombrement des moyens de synchronisation utilisés.

A cet effet, ces moyens sont constitués par un anneau de synchronisation disposé entre les deux pignons intermédiaires.

Le dispositif de commande interne proposé par l'invention peut donc avantageusement comporter un premier et un second pignon mobiles en rotation à l'intérieur d'un carter autour d'un même axe à des vitesses différentes et un anneau de synchronisation disposé entre le premier et le second pignon, qui présente une surface conique de friction rencontrant une surface conique de friction du second pignon sous la poussée d'une denture intérieure du premier pignon, de façon à égaliser la vitesse de rotation du premier et du second pignon avant que leurs dentures respectives entrent en contact.

Dans ce cas, le premier pignon se déplace avec l'axe de marche arrière en direction de l'anneau de synchronisation.

Le premier pignon présente en effet une surface conique de friction rencontrant une surface conique de friction du second pignon sous la poussée d'une denture intérieure du premier pignon de façon à égaliser la vitesse de rotation du premier et du second pignon avant que leurs dentures respectives entrent en contact.

L'invention a donc également pour objet un dispositif de synchronisation. Ce dispositif de synchronisation convient en particulier pour la commande interne d'une marche arrière de boîte de vitesses mécanique, car il est particulièrement peu encombrant.

Le dispositif de synchronisation proposé comporte un anneau de synchronisation disposé entre un premier et un second pignon à synchroniser. Cet anneau présente une surface conique de friction rencontrant une surface conique de friction du second pignon sous la poussée d'une denture intérieure du premier pignon, de façon à égaliser la vitesse de rotation du premier et du second pignon avant que leurs dentures respectives entrent en contact.

Pour réaliser l'immobilisation relative du premier pignon par rapport à l'anneau avant le crabotage des dentures des pignons, les dents du premier pignon présentent une gorge circulaire retenant un jonc qui assure le positionnement relatif du premier pignon et de l'anneau de synchronisation jusqu'à ce que les dents du premier pignon débordent latéralement des dents de l'anneau pour poursuivre leur déplacement en direction des dents du second pignon.

D'autres caractéristiques et avantages de l'invention apparaîtront clairement à la lecture de la description suivante d'un mode de réalisation particulier de celle-ci, en liaison avec les dessins annexés, sur lesquels :
- la figure 1 est une coupe transversale simplifiée d'une boîte de vitesses mécanique conforme à l'invention,
- la figure 2 correspond à une coupe longitudinale selon AB, de la même boîte de vitesse présentant de façon fictive ses deux arbres et l'axe de marche arrière dans un même plan,
- les figures 3 et 4 sont des vues de détail du dispositif de commande interne proposé, au point mort et en marche arrière.
- les figures 5A et 5F illustrent le fonctionnement du dispositif proposé.

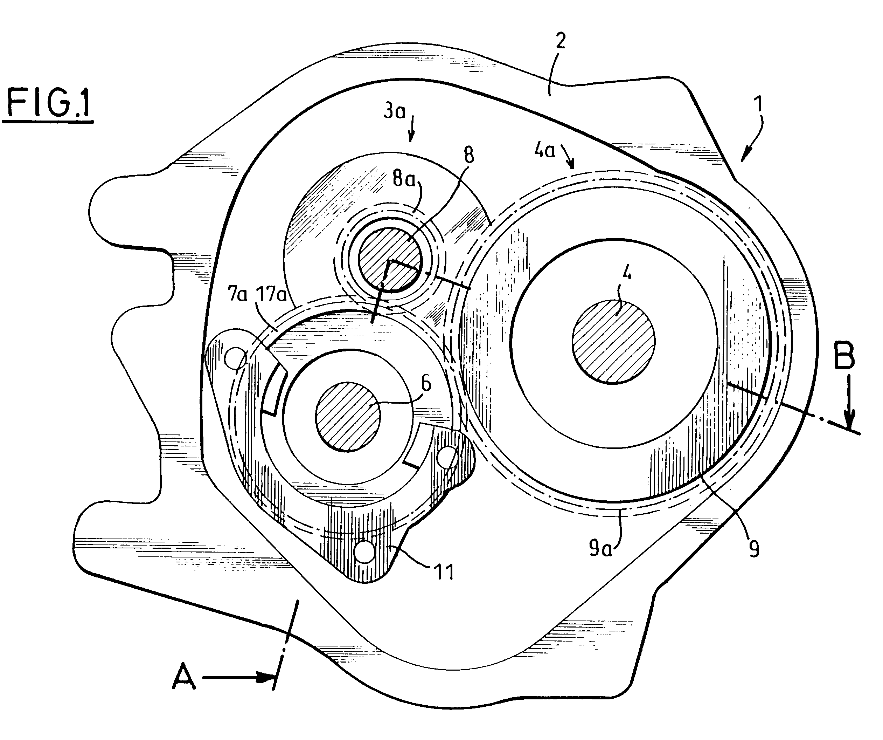

Sur la figure 1, on a représenté, à l'intérieur du carter 2 d'une boîte de vitesses 1, l'emplacement de la ligne primaire 3a, de la ligne secondaire 4a et de l'axe de marche arrière 6 de celle-ci. Selon une disposition classique, une denture de pignon 7a, 17a, portée par l'axe de marche arrière 6 est en prise avec une denture de pignon primaire 8a, et une denture de pignon secondaire 9a, en marche arrière, de façon à inverser le sens du mouvement entre la ligne primaire 3a et la ligne secondaire 4a. Enfin, la figure 1 fait apparaître une fourchette 11 de type particulier, dont la fonction est expliquée plus loin.

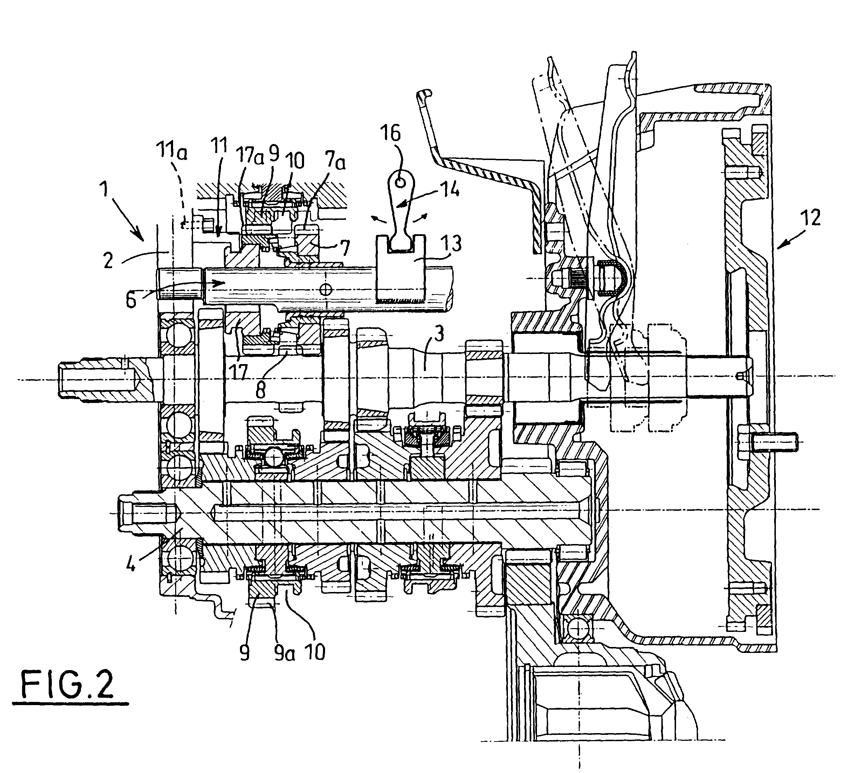

La figure 2 correspond à une coupe fictive de la boîte de vitesses 1, selon la figure brisée AB de la figure 1, qui traverse l'axe de marche arrière 6, la ligne primaire 3a et la ligne secondaire 4a, à laquelle on a jouté le mécanisme d'embrayage 12 associé à la ligne primaire. Sur cette figure, le même pignon secondaire 9, qui est porté par un baladeur de marche avant 10, apparaît une première fois dans la partie inférieure du schéma, autour de l'arbre secondaire 4, et une seconde fois dans la partie supérieure du schéma, en prise avec un pignon intermédiaire de marche arrière 17.

La figure 2 fait apparaître que l'axe de marche arrière 6 porte deux pignons intermédiaires de marche arrière 7, 17. Le premier pignon intermédiaire 7 est partiellement engagé dans la denture 8a d'un pignon primaire 8, tandis que le second pignon intermédiaire 17 est entièrement engagé dans la denture 9a d'un pignon secondaire 9. Bien entendu, la figure 2 n'est pas limitative quant à la nature des pignons primaire et secondaire engrenant avec les pignons intermédiaires, et on peut envisager, sans sortir du cadre de l'invention que chaque pignon intermédiaire 7, 17 engrène avec un pignon quelconque de la ligne primaire 3a et de la ligne secondaire 4a.

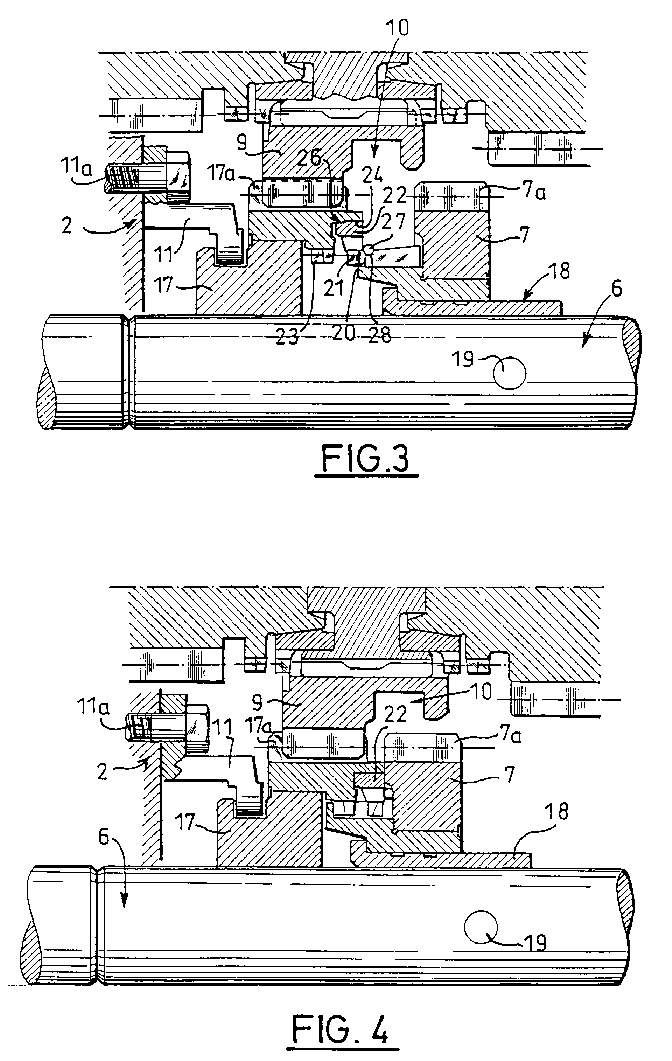

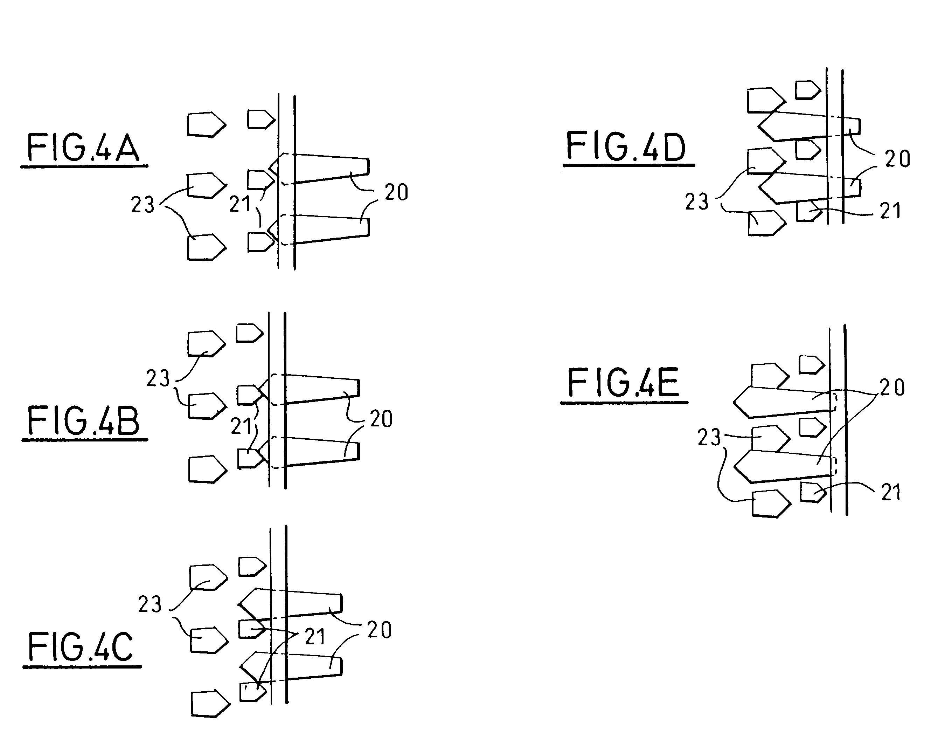

L'invention propose en effet de substituer à l'unique pignon intermédiaire de marche arrière des boîtes de vitesses connues, deux pignons intermédiaires engrenant respectivement avec la ligne primaire et avec la ligne secondaire. Elle a donc pour objet, un dispositif de commande interne de marche arrière appliquant cette disposition mais concerne également les moyens de synchronisation autorisant un tel engrènement. Son fonctionnement est maintenant expliqué en se reportant à la figure 2 et aux figures 3 et 4 correspondant respectivement à un agrandissement partiel de celle-ci au point mort, et en marche arrière.

Conformément à l'invention, le premier pignon intermédiaire 7 engrène en permanence avec un pignon primaire 8, et le second pignon intermédiaire 17 est lié en permanence à la ligne secondaire 4a par la denture 9a d'un pignon secondaire porté par exemple par le baladeur 10 du troisième et quatrième rapports de marche avant. Les deux pignons intermédiaires 7, 17 sont libres en rotation vis-à-vis de l'axe de marche arrière 6, le premier 7, étant par exemple monté autour d'une bague 18 immobilisée axialement par une goupille 19 sur l'axe 6, tandis que le second 17, monté directement autour de l'axe 6, tourne également librement autour de celui-ci.

L'axe 6 se déplace avec le premier pignon intermédiaire 7 entre une position de marche arrière sous la commande d'un doigt de marche arrière 14, actionné par l'axe de commande interne 16 de la boîte et engagé dans un crabot 13 fixé sur l'axe 6. En position de point mort, le premier pignon intermédiaire 7 engrène partiellement avec la denture 8a du pignon primaire 8, alors qu'en position de marche arrière, il est entièrement engagé dans celle-ci. En revanche, le second pignon intermédiaire 17 ne se déplace pas en direction axiale, car il est immobilisé axialement vis-à-vis du carter 2 par la fourchette 11.

Lorsque la denture 9a du pignon secondaire 9 avec laquelle est en prise le second pignon intermédiaire 17, est portée par un baladeur de marche avant, ce dernier se déplace le long de la ligne secondaire lors du passage des rapports de marche avant. L'invention prévoit cependant que dans ce cas, le second pignon intermédiaire 17 ne sorte jamais de la denture 9a de façon à engrener en permanence avec un pignon secondaire.

Le premier pignon intermédiaire 7 est pourvu d'une denture d'accouplement intérieure 20, rencontrant la denture 21 d'un anneau de synchronisation 22, avant de s'engager dans la denture d'accouplement intérieure 23 du second pignon intermédiaire 17. L'anneau de synchronisation est un anneau de synchronisation de type classique, qui présente une surface conique de frottement 24, rencontrant une surface de frottement complémentaire 26 du second pignon intermédiaire 17, pour égaliser les vitesses de rotation des deux pignons intermédiaires 7, 17, avant l'engrènement de leurs dentures intérieures d'accouplement respectives 20, 23, tandis qu'un jonc, ou ressort de synchronisation 27, rappelle le premier pignon 7, à l'écart de l'anneau 22, lors du dégagement de la marche arrière.

L'invention prévoit donc de placer des moyens de synchronisation appropriés entre les deux pignons intermédiaires 7, 17, afin d'assurer l'égalisation de leurs vitesses de rotation avant leur engagement mutuel. On remarquera également que ces pignons ne sont jamais liés en rotation à l'axe de marche arrière 6, qui est simplement déplacé en translation par le doigt 14 en entraînant dans son déplacement axial le premier pignon intermédiaire 7.

En comparant les figures 3 et 4, on voit que le second pignon intermédiaire 17 et le baladeur 22 ne se sont pas déplacés axialement, tandis que l'axe de marche arrière 6, le premier pignon intermédiaire 7 et l'anneau de synchronisation 22, se sont rapprochés du second pignon intermédiaire 17 pour assurer successivement la synchronisation et l'immobilisation relative des deux pignons intermédiaires 7, 17.

Lorsque cette opération est réalisée, les deux pignons intermédiaires 7, 17, solidaires en rotation, et respectivement liés à l'arbre primaire 3 et à l'arbre secondaire 4, assurent l'inversion de mouvement nécessaire à l'entraînement du véhicule en marche arrière pour la boîte 2.

Conformément à l'invention, la synchronisation relative des deux pignons intermédiaires 7, 17 est opérée sans baladeur de commande tel qu'en comportent les synchroniseurs connus. En effet, lors du passage de la marche arrière, le premier pignon intermédiaire 7, entraîné en translation, par l'axe de marche arrière 6 exerce la fonction habituelle d'un baladeur de boîte de vitesses. Sa denture 20 possède une gorge circulaire 28 retenant le jonc 27 au point mort.

Comme indiqué ci-dessus, le jonc 27 rappelle au point mort le premier pignon de marche arrière 17 à l'écart de l'anneau 22, de façon à ce que leurs dentures respectives 20, 21 ne soient pas en contact (cf. figure 5A). Lors des phases dites d'armement, et de synchronisation, (cf. figure 5B) au cours desquelles le premier pignon de marche arrière 7 rencontre par sa denture 20 la denture 21 de l'anneau de synchronisation et repousse la surface conique de frottement femelle 26 de ce dernier sur la surface conique de frottement mâle 24 du second pignon intermédiaire 17, le jonc 27 reste dans la gorge 28. De façon classique, lorsque l'anneau de synchronisation 22 et le second pignon intermédiaire 17 sont solidarisés et après le débordement latéral ou "dévirage" des dents 21 de l'anneau 22 par celles du premier pignon intermédiaire 7 (cf. figure 5C), le jonc 27 quitte la gorge 28 pour permettre au premier pignon 7 de poursuivre son déplacement dans une phase dite de "vol libre" (cf. figure 5D) en direction du second pignon 17, jusqu'au crabotage de leurs dentures (cf. figure 5E). Le jonc 27 s'élève alors sur les flancs des dents 20 du premier pignon intermédiaire 7, qui constituent une rampe inclinée.

De façon classique, la même rampe est descendue par le jonc 27 lors du dégagement de la marche arrière s'effectuant, comme on l'aura compris, en déplaçant le premier pignon de marche arrière 7 à l'écart du second, par l'intermédiaire de l'axe 6 du crabot 13 et du doigt de commande 14.

L'invention prévoit donc de placer des moyens de synchronisation appropriés entre les deux pignons intermédiaires 7, 17, afin d'assurer l'égalisation de leurs vitesses de rotation avant leur engagement mutuel. On remarquera également que ces pignons ne sont jamais liés en rotation à l'axe de marche arrière 6 qui est simplement déplacé en translation par le doigt 14 en entraînant dans son déplacement axial le premier pignon intermédiaire 7.

En comparant les figures 3 et 4 on voit que le second pignon intermédiaire 17 et le pignon secondaire 9 ne se sont pas déplacés axialement, tandis que l'axe de marche arrière 6, le premier pignon intermédiaire 7 et l'anneau 22 se sont rapprochés du second pignon intermédiaire 17, pour assurer successivement la synchronisation et l'immobilisation relative des deux pignons intermédiaires 7, 17.

Lorsque cette opération est réalisée, les deux pignons intermédiaires 7, 17, solidaires en rotation et respectivement liés à l'arbre primaire 3 et à l'arbre secondaire 4, assurent l'inversion de mouvement nécessaire à l'entraînement du véhicule en marche arrière pour la boîte 2.

Le dispositif de synchronisation proposé par l'invention permet donc d'engager la marche arrière du dispositif de changement de vitesse décrit ci-dessus, en rendant solidaires en rotation deux pignons coaxiaux par rapprochement mutuel et crabotage de dentures intérieures, sans utiliser de baladeur. De fait la fonction habituelle du baladeur des synchroniseurs connus, consistant à déplacer un premier pignon et l'anneau de synchronisation en direction d'un second pignon, est assurée par le premier pignon lui-même qui est solidaire en translation de l'axe de marche arrière, alors que le second pignon intermédiaire coulisse sur celui-ci.

Ces dispositions sont particulièrement avantageuses dans l'exemple de réalisation de l'invention décrit ci-dessus, car elles permettent d'effectuer la synchronisation nécessaire au passage de la marche arrière sans rajouter de baladeur autour de l'axe de marche arrière, donc d'obtenir un système de commande de marche arrière suffisamment peu encombrant pour s'intégrer facilement dans une boîte de vitesses compacte.

L'invention est toutefois loin de trouver une application exclusive dans la commande des marches arrière, et on peut envisager sans sortir du cadre de l'invention, d'utiliser ou d'adapter un tel dispositif pour passer des rapports de marche avant, ou de façon plus générale, pour assurer l'égalisation des vitesses de rotation, de tout couple de pignons tournant à des vitesses différentes autour du même axe.

Elle permet notamment de réaliser un dispositif de commande interne de marche arrière peu encombrant assurant, sans le moindre craquement, la prise de mouvement sur l'axe de marche arrière, nécessaire à l'engagement de la marche arrière, et un dispositif de synchronisation approprié à une telle prise de mouvement.

## Revendications

1. Dispositif de commande interne de marche arrière pour boîte de vitesses mécanique (1) à arbres parallèles (3, 4), munie d'un axe de marche arrière (6) déplaçable entre une première position ou position de point mort et de marche avant dans laquelle le mouvement est transmis directement de l'arbre primaire (3) à l'arbre secondaire (4), et une seconde position ou position de marche arrière dans laquelle il assure l'inversion du mouvement entre l'arbre primaire (3) et l'arbre secondaire (4), caractérisé en ce que l'axe de marche arrière (6) porte deux pignons intermédiaires (7, 17) liés en permanence avec l'arbre primaire (3) et avec l'arbre secondaire (4).

2. Dispositif de commande selon la revendication 1, caractérisé en ce que l'engagement de la marche arrière est obtenu par immobilisation relative des deux pignons intermédiaires (7, 17).

3. Dispositif de commande selon la revendication 1 ou 2, caractérisé en ce que les deux pignons intermédiaires (7, 17) tournent librement autour de l'axe de marche arrière (6) et en ce que le premier pignon intermédiaire (7) est immobilisé axialement sur l'axe de marche arrière (6), tandis que le second pignon intermédiaire (17) est immobilisé axialement vis-à-vis du carter (2) de la boîte (1).

4. Dispositif de commande selon la revendication 1, 2 ou 3, caractérisé en ce que les pignons intermédiaires (7, 17) possèdent des dentures intérieures (20, 23) engrenant lors de l'engagement de la marche arrière.

5. Dispositif de commande selon la revendication 4, caractérisé en ce qu'il comporte des moyens de synchronisation (22) permettant d'égaliser la vitesse de rotation des pignons intermédiaires (7, 17) avant leur engrènement.

6. Dispositif de commande selon la revendication 5, caractérisé en ce que les moyens de synchronisation (22) sont constitués par un anneau de synchronisation disposé entre les deux pignons intermédiaires (7, 17).

7. Dispositif de commande selon l'une des revendications précédentes, caractérisé en ce que le premier pignon intermédiaire (7) engrène en permanence avec un pignon (8) de l'arbre primaire (3) et en ce que le second pignon intermédiaire (17) engrène en permanence avec un pignon (9) de l'arbre secondaire (4).

8. Dispositif de commande interne de marche arrière comportant un premier et d'un second pignon (7, 17) mobiles en rotation à l'intérieur d'un carter (2) autour d'un même axe (6) à des vitesses différentes et un anneau de synchronisation (22) disposé entre le premier et le second pignon (7, 17), qui présente une surface conique de friction (24) rencontrant une surface conique de friction (26) du second pignon (17) sous la poussée d'une denture intérieure (20) du premier pignon (7), de façon à égaliser la vitesse de rotation du premier et du second pignon (7, 17) avant que leurs dentures respectives (20, 23) entrent en contact, caractérisé en ce que le premier pignon (7) n'est pas lié en rotation à l'axe (6) et en ce que le premier pignon (7) est lié à l'axe (6) de façon à se déplacer avec celui-ci en direction de l'anneau de synchronisation (22) et du second pignon (17), alors que le second pignon (17) est immobilisé axialement vis-à-vis du carter (2).

9. Dispositif de synchronisation, en particulier pour dispositif de commande de marche arrière selon la revendication 1 ou 2, caractérisé en ce qu'il comporte un anneau de synchronisation (22) disposé entre le premier et le second pignon (7, 17), qui présente une surface conique de friction (24) rencontrant une surface conique de friction (26) du second pignon (17) sous la poussée d'une denture intérieure (20) du premier pignon (7), de façon à égaliser la vitesse de rotation du premier et du second pignon (7, 17) avant que leurs dentures respectives (20, 23) entrent en contact.

10. Dispositif de synchronisation selon la revendication 9, caractérisé en ce que le premier et le second pignon (7, 17) ne sont pas liés en rotation à l'axe (6) et en ce que le premier pignon (7) est lié en translation à l'axe (6) de façon à se déplacer avec celui-ci en direction de l'anneau de synchronisation (22) et du second pignon (17), alors que le second pignon (17) est immobilisé en translation vis-à-vis du carter (2).

11. Dispositif de synchronisation selon la revendication 8, 9 ou 10, caractérisé en ce que les dents (20) présentent une gorge circulaire (28) retenant un jonc (27) qui assure le positionnement relatif du premier pignon (7) et de l'anneau de synchronisation (22) jusqu'à ce que les dents (20) du premier pignon débordent latéralement des dents (21) de l'anneau (22) pour poursuivre leur déplacement en direction des dents (23) du second pignon.

12. Dispositif de synchronisation selon la revendication 11, caractérisé en ce que le premier et le second pignon (7, 17) sont respectivement liés en rotation à un pignon primaire (8) et à un pignon secondaire (9) d'une boîte de vitesses (1).

13. Dispositif de synchronisation selon la revendication 12, caractérisé en ce que le pignon secondaire (9) est porté par un baladeur de marche avant (10) de la boîte (1).
